# EUROPEAN PATENT APPLICATION

(11) **EP 3 229 344 A1**
(43) Date of publication of application: **11.10.2017**
(21) Application number: 14907410.6
(22) Date of filing: 05.12.2014
(51) Int. Cl.: H02K 1/18

(54) **STATOR OF ELECTRIC MOTOR AND METHOD FOR MANUFACTURING STATOR OF ELECTRIC MOTOR**

(71) Applicant: Mitsubishi Electric Corporation, Chiyoda-ku Tokyo 100-8310 (JP)
(72) Inventor: KAWASAKI, Keiu, Tokyo 100-8310 (JP); OZAKI, Junichi, Tokyo 100-8310 (JP); KATO, Masahiro, Tokyo 100-8310 (JP)
(74) Representative: Pfenning, Meinig & Partner mbB
(86) International application number: PCT/JP2014/082301
(87) International publication number: WO 2016/088264

(57) **Abstract**

A core back made by stacking a plurality of strip-shaped core back segment groups made by connecting a plurality of arc-shaped core back segments 1a, 1b, 1c, 1d, 1e, and 1f, and a plurality of teeth made by stacking a plurality of tooth pieces 2a, 2b, 2c, 2d, 2e, and 2f, disposed radially inside the core back segment groups formed in an annular shape, and extending toward a center of the core back are included. Grooves 1a1, 1b1, 1c1, 1d1, 1e1, and 1f1 of a shape in which end portions of the plurality of tooth pieces 2a, 2b, 2c, 2d, 2e, and 2f are fitted individually are formed in the respective concave surfaces of the plurality of core back segments 1a, 1b, 1c, 1d, 1e, and 1f.

## Description

### Field

The present invention relates to a motor stator formed by stacking a plurality of core back segments and tooth pieces stamped out of an electromagnetic steel sheet, and a method of manufacturing the motor stator.

### Background

A conventional motor stator disclosed in Patent Literature 1 includes an annular yoke and a plurality of teeth fitted and fixed in a plurality of recessed portions provided in inner peripheral portions of the annular yoke at regular intervals. The plurality of teeth that has been provided with windings is individually fitted and fixed in the recessed portions of the annular yoke.

A conventional motor stator disclosed in Patent Literature 2 includes a laminated yoke member made by stacking a plurality of core members formed by aligning a plurality of core segments in a strip shape, a plurality of thin-walled portions connecting adjacent core segments, and a plurality of teeth fixed to the laminated yoke member by recessed wedge-shaped portions, regions surrounded by end portions of the adjacent core segments and the thin-walled portions, being fitted thereon. In the stator in Patent Literature 2, wedge-shaped portions of the teeth provided with windings are fitted in the recessed portions of the laminated yoke member, and then the thin-walled portions are bent to form an annular yoke.

### Citation List

### Patent Literature

Patent Literature 1: WO 2013/157100 A
Patent Literature 2: JP 2000-152526 A

### Summary

### Technical Problem

However, the conventional art in Patent Literature 1, in which the annular yoke is stamped out of a base material of a rectangular electromagnetic steel sheet, thus has a problem that many base material portions are not used as cores, resulting in poor material yield.

The yoke in Patent Literature 2 has a structure in which adjacent core segments are connected by thin-walled portions, and further, recessed portions provided in the thin-walled portions hold tooth end portions therein, so that the thin-walled portions need to have a structure withstanding stress of holding teeth in addition to stress during bending, that is, the radial width of the thin-walled portions needs to be increased. Therefore, the yoke that has been formed in an annular shape by bending the thin-walled portions has a problem that the roundness of the outer peripheral side may become worse. Further, the yoke in Patent Literature 2 has a structure in which recessed portions provided in thin-walled portions hold tooth end portions therein, and thus has a problem that connections between adjacent core segments cannot be reinforced by welding, so that the rigidity of the connections are reduced, and it is difficult to provide roundness of the yoke outer periphery.

The present invention has been made in view of the above, and has an object of providing a motor stator capable of improving quality while improving yield.

### Solution to Problem

In order to solve the problems and achieve the object, according to an aspect of the present invention, there is provided a motor stator including: a core back made by stacking a plurality of strip-shaped core back segment groups made by connecting a plurality of arc-shaped core back segments; and a plurality of teeth made by stacking a plurality of tooth pieces, disposed radially inside the core back segment groups formed in an annular shape, and extending toward a center of the core back, wherein a groove of a shape in which an end portion of each of the plurality of tooth pieces is fitted is formed in a concave surface of each of the plurality of core back segments.

### Advantageous Effects of Invention

The motor stator according to the present invention has an effect of being able to improve quality while improving yield.

### Brief Description of Drawings

FIG. 1 is a diagram illustrating a motor stator according to a first embodiment of the present invention.
FIG. 2 is a diagram illustrating an arranged state of components of a stator core before being stamped out of an electromagnetic steel sheet.
FIG. 3 is a diagram illustrating the components of the stator core after being stamped out of the electromagnetic steel sheet.
FIG. 4 is a diagram illustrating a first tooth piece pair constituted by two tooth pieces after bridges are cut.
FIG. 5 is a diagram illustrating a second tooth piece pair constituted by two tooth pieces after bridges are cut.
FIG. 6 is a diagram illustrating a third tooth piece pair constituted by two tooth pieces after bridges are cut.
FIG. 7 is a diagram illustrating a state where insulating bobbins made of resin are fitted to the first tooth piece pair illustrated in FIG. 4.
FIG. 8 is a diagram illustrating a state where insulating bobbins made of resin are fitted to the second tooth piece pair illustrated in FIG. 5.
FIG. 9 is a diagram illustrating a state where insulating bobbins made of resin are fitted to the third tooth piece pair illustrated in FIG. 6.
FIG. 10 is a diagram illustrating a state where windings are wound around the first tooth piece pair provided with the insulating bobbins illustrated in FIG. 7.
FIG. 11 is a diagram illustrating a state where windings are wound around the second tooth piece pair provided with the insulating bobbins illustrated in FIG. 8.
FIG. 12 is a diagram illustrating a state where windings are wound around the third tooth piece pair provided with the insulating bobbins illustrated in FIG. 9.
FIG. 13 is a diagram illustrating an annular insulating tooth unit constituted by the three pairs of tooth pieces provided with the windings illustrated in FIGS. 10 to 12.
FIG. 14 is a diagram illustrating an annular core back.
FIG. 15 is a diagram illustrating a state where welding has been performed on the annular core back.
FIG. 16 is a diagram illustrating an example where windings are wound around the teeth.
FIG. 17 is a first diagram illustrating a notch formed between adjacent core back segments of a first core back segment group constituting a part of a motor stator according to a second embodiment of the present invention.
FIG. 18 is a second diagram illustrating a notch formed between adjacent core back segments of a second core back segment group constituting a part of the motor stator according to the second embodiment of the present invention.
FIG. 19 is a diagram illustrating a state where a plurality of core back segment groups illustrated in FIGS. 17 and 18 is bent and stacked.
FIG. 20 is a first diagram illustrating a core back segment group constituting a part of a motor stator according to a third embodiment of the present invention.
FIG. 21 is a second diagram illustrating a core back segment group constituting a part of the motor stator according to the third embodiment of the present invention.
FIG. 22 is a diagram illustrating a state where a plurality of core back segment groups illustrated in FIGS. 20 and 21 is stacked.
FIG. 23 is a first layout diagram when core back segment groups constituting a part of a motor stator according to a fourth embodiment of the present invention are stamped out of an electromagnetic steel sheet.
FIG. 24 is a second layout diagram when core back segment groups constituting a part of a motor stator according to the fourth embodiment of the present invention are stamped out of an electromagnetic steel sheet.
FIG. 25 is a layout diagram when tooth piece groups constituting a part of a motor stator according to the fourth embodiment of the present invention are stamped out of an electromagnetic steel sheet.

### Description of Embodiments

Hereinafter, a motor stator and a method of manufacturing the motor stator according to embodiments of the present invention will be described in detail with reference to the drawings. The embodiments are not intended to limit the invention.

### First Embodiment.

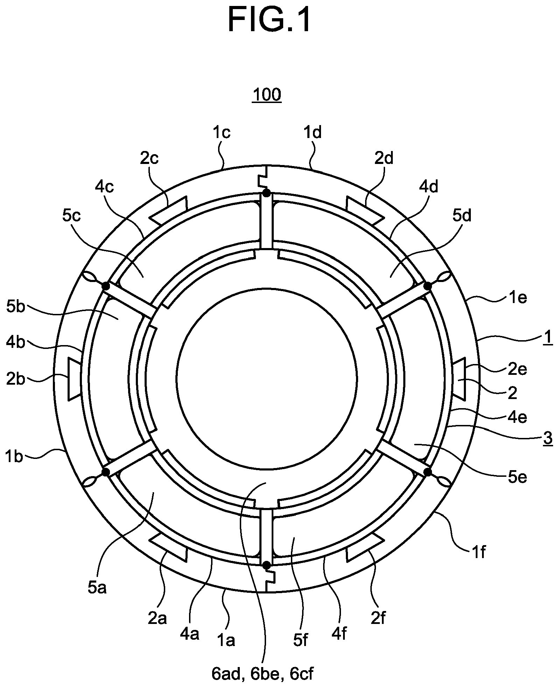

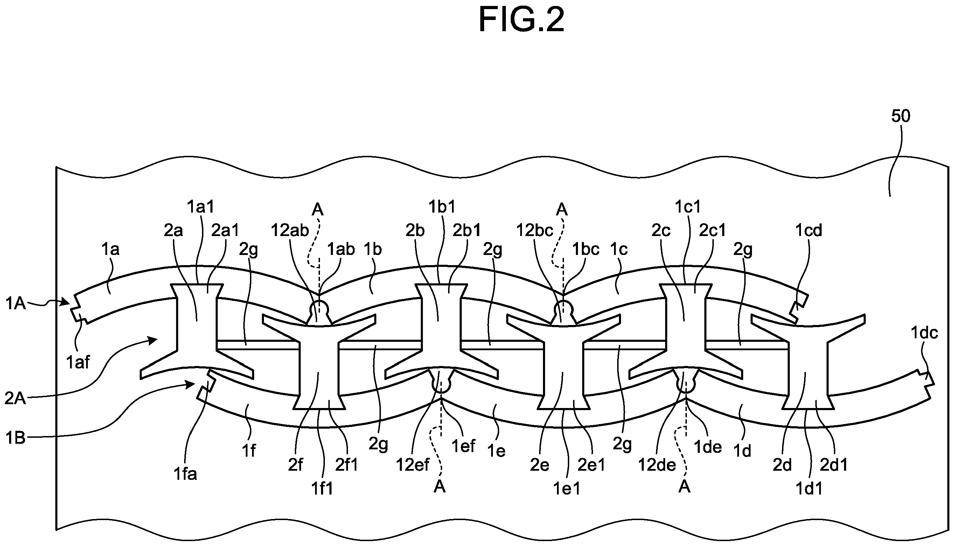

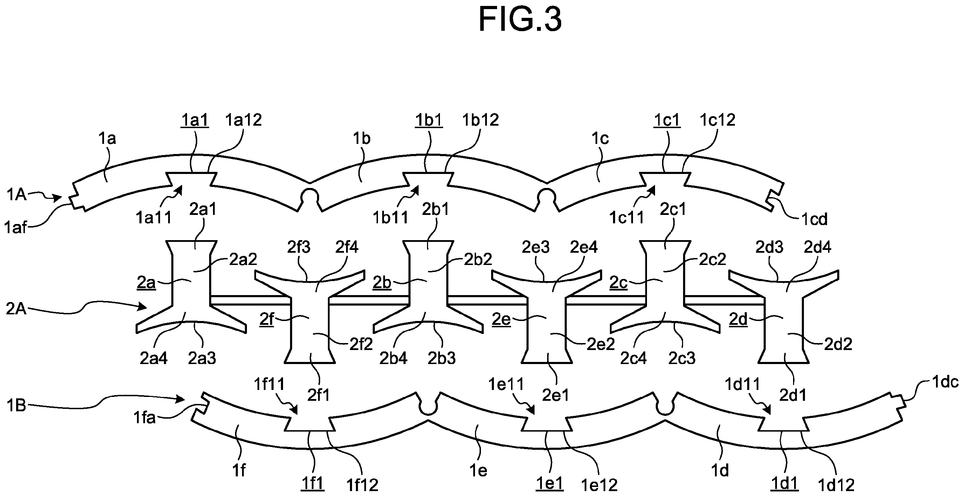

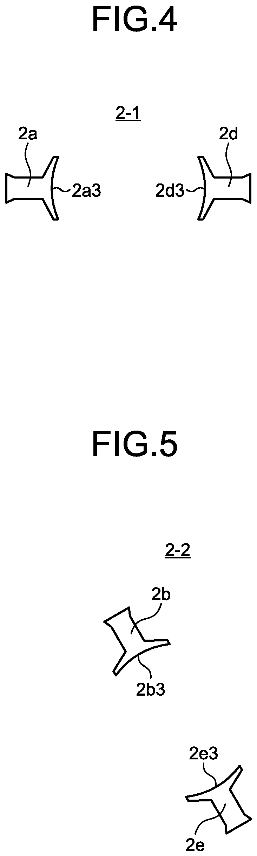

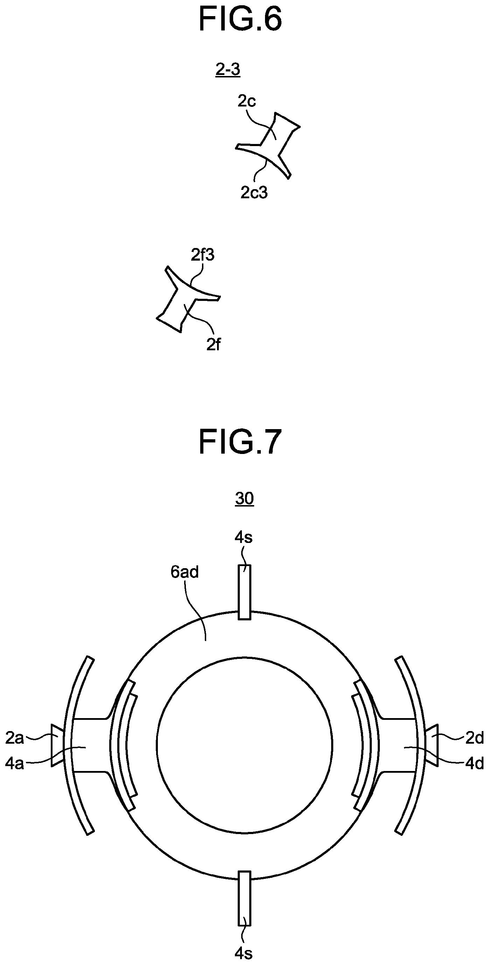

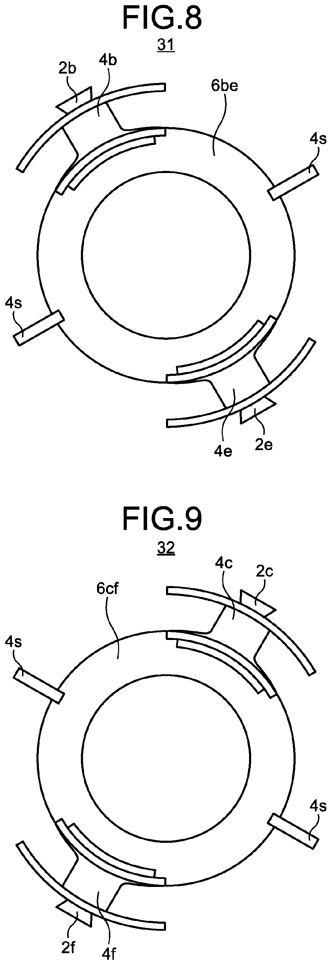

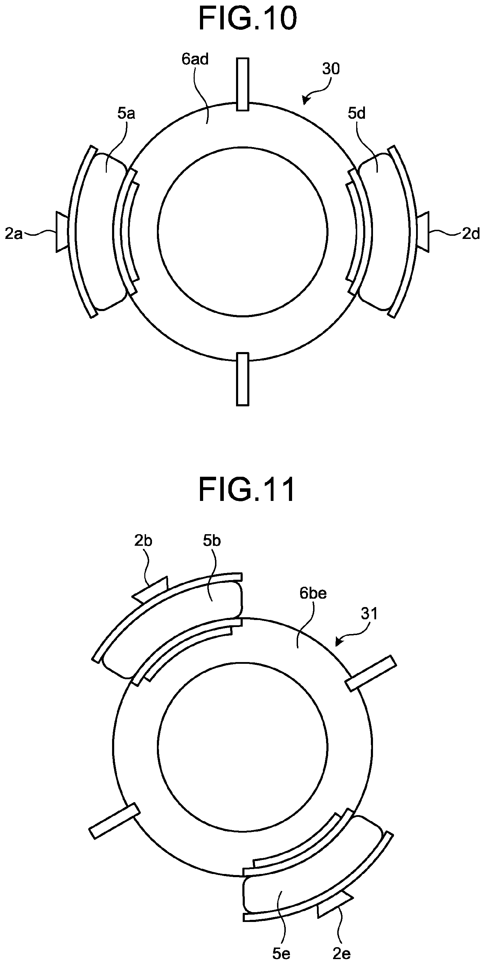

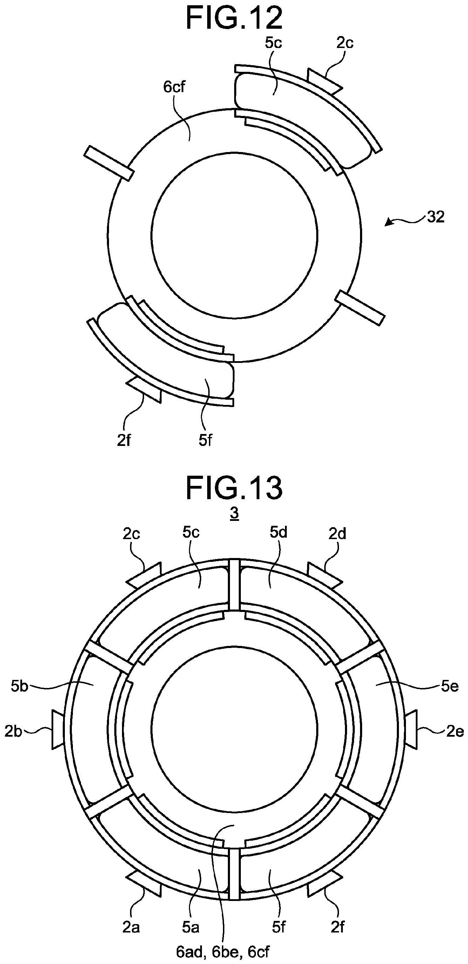

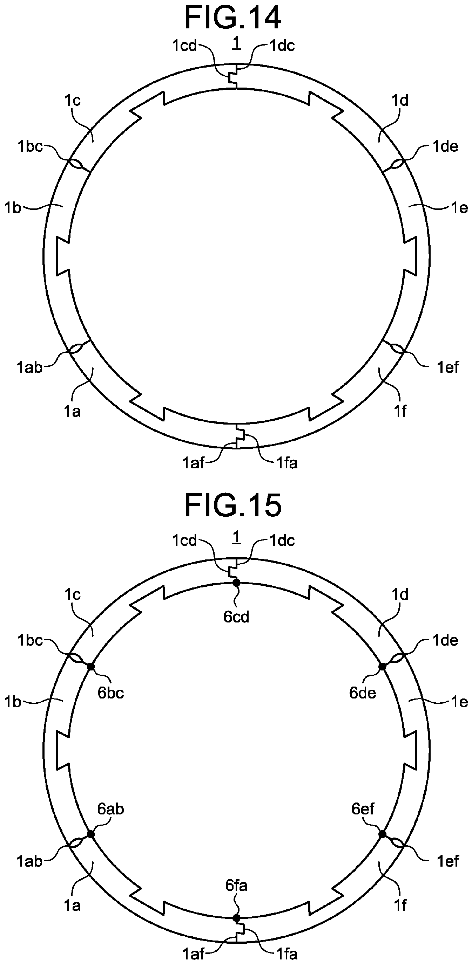

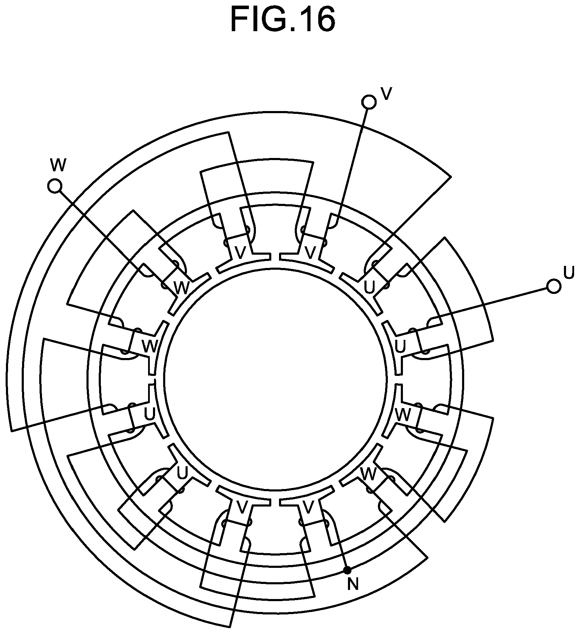

FIG. 1 is a diagram illustrating a motor stator according to a first embodiment of the present invention. FIG. 2 is a diagram illustrating an arranged state of components of a stator core before being stamped out of an electromagnetic steel sheet. FIG. 3 is a diagram illustrating the components of the stator core after being stamped out of the electromagnetic steel sheet. FIG. 4 is a diagram illustrating a first tooth piece pair constituted by two tooth pieces after bridges are cut. FIG. 5 is a diagram illustrating a second tooth piece pair constituted by two tooth pieces after bridges are cut. FIG. 6 is a diagram illustrating a third tooth piece pair constituted by two tooth pieces after bridges are cut. FIG. 7 is a diagram illustrating a state where insulating bobbins are fitted to the first tooth piece pair illustrated in FIG. 4. FIG. 8 is a diagram illustrating a state where insulating bobbins are fitted to the second tooth piece pair illustrated in FIG. 5. FIG. 9 is a diagram illustrating a state where insulating bobbins are fitted to the third tooth piece pair illustrated in FIG. 6. FIG. 10 is a diagram illustrating a state where windings are wound around the first tooth piece pair provided with the insulating bobbins illustrated in FIG. 7. FIG. 11 is a diagram illustrating a state where windings are wound around the second tooth piece pair provided with the insulating bobbins illustrated in FIG. 8. FIG. 12 is a diagram illustrating a state where windings are wound around the third tooth piece pair provided with the insulating bobbins illustrated in FIG. 9. FIG. 13 is a diagram illustrating an annular insulating tooth unit constituted by the three tooth piece pairs provided with the windings illustrated in FIGS. 10 to 12. FIG. 14 is a diagram illustrating an annular core back. FIG. 15 is a diagram illustrating a state where welding has been performed on the annular core back. FIG. 16 is a diagram illustrating an example where teeth are provided with windings.

A motor stator 100 illustrated in FIG. 1 includes an annular core back 1 made by stacking a plurality of core back segment groups each made by connecting a plurality of core back segments 1a, 1b, 1c, 1d, 1e, and 1f formed by stamping an electromagnetic steel sheet 50 illustrated in FIG. 2 into an arc shape, and an annular insulating tooth unit 3 disposed radially inside the core back 1. The annular insulating tooth unit 3 includes: a plurality of teeth 2 made by individually stacking a plurality of tooth pieces 2a, 2b, 2c, 2d, 2e, and 2f formed by stamping the electromagnetic steel sheet 50 into a T shape; insulating bobbins 4a, 4b, 4c, 4d, 4e, and 4f, a plurality of insulating members, respectively provided to the plurality of teeth 2; windings 5a, 5b, 5c, 5d, 5e, and 5f wound around the plurality of teeth 2 via the plurality of insulating bobbins 4a to 4f; an annular connecting member 6ad connecting the insulating bobbin 4a and the insulating bobbin 4d; an annular connecting member 6be connecting the insulating bobbin 4b and the insulating bobbin 4e; and an annular connecting member 6cf connecting the insulating bobbin 4c and the insulating bobbin 4f. The direction of stacking is the direction vertical to the paper surface. The plurality of teeth 2 is arranged at regular intervals radially inside the core back 1, and extends toward the center of the core back 1. The core back 1 and the plurality of teeth 2 constitute a stator core.

FIGS. 2 and 3 illustrate: a first core back segment group 1A made up of the three core back segments 1a, 1b, and 1c of the six core back segments 1a to 1f constituting the core back segment groups, disposed individually longitudinally and connected via thin-walled connections 1ab and 1bc; and a second core back segment group 1B made up of the three core back segments 1d, 1e, and 1f of the six core back segments 1a to 1f constituting the core back segment groups, disposed individually longitudinally and connected via thin-walled connections 1de and 1ef. FIGS. 2 and 3 illustrate: a first tooth piece group made up of the three tooth pieces 2a, 2b, and 2c shaped to be fitted in the core back segments 1a, 1b, and 1c constituting the first core back segment group 1A; and a second tooth piece group made up of the three tooth pieces 2d, 2e, and 2f shaped to be fitted in the core back segments 1d, 1e, and 1f constituting the second core back segment group 1B, disposed between the first core back segment group 1A and the second core back segment group 1B. A tooth piece group 2A has the tooth pieces 2a to 2f constituting the first tooth piece group and the second tooth piece group, adjacent tooth pieces of which are connected to each other.

In the example in FIGS. 2 and 3, the numbers of the plurality of core back segments constituting the first core back segment group 1A and the second core back segment group 1B are each three, but the number of core back segments constituting each core back segment group is not limited to that in the illustrated example. The number of tooth pieces constituting the tooth piece group 2A is also not limited to that in the illustrated example.

For the core back segments 1a, 1b, and 1c, individual concave surfaces of the core back segments 1a, 1b, and 1c are disposed opposite to individual concave surfaces of the core back segments 1d, 1e, and 1f. Specifically, for the core back segment 1f disposed at the left of the second core back segment group 1B, the concave surface of the core back segment 1f is disposed opposite to the respective concave surfaces of the core back segments 1a and 1b, a first end thereof is disposed opposite to the bottom of the concave surface of the core back segment 1a, and a second end thereof is disposed opposite to the bottom of the concave surface of the core back segment 1b. For the core back segment 1e disposed at the center of the second core back segment group 1B, the concave surface of the core back segment 1e is disposed opposite to the respective concave surfaces of the core back segments 1b and 1c, a first end thereof is disposed opposite to the bottom of the concave surface of the core back segment 1b, and a second end thereof is disposed opposite to the bottom of the concave surface of the core back segment 1c. For the core back segment 1d disposed at the right of the second core back segment group 1B, the concave surface of the core back segment 1d is disposed opposite to the respective concave surfaces of the core back segments 1b and 1c, and a first end thereof is disposed opposite to the bottom of the concave surface of the core back segment 1c.

A fitting portion 1af in a protruding shape to be fitted in a recessed portion 1fa formed at the first end of the core back segment 1f is formed at a first end of the core back segment 1a. A second end of the core back segment 1a is connected to a first end of the core back segment 1b via the thin-walled connection 1ab. A second end of the core back segment 1b is connected to a first end of the core back segment 1c via the thin-walled connection 1bc. A recessed portion 1cd in which a fitting portion 1dc in a protruding shape formed at a second end of the core back segment 1d is formed at a second end of the core back segment 1c. The first end of the core back segment 1d is connected to the second end of the core back segment 1e via the thin-walled connection 1de. The first end of the core back segment 1e is connected to the second end of the core back segment 1f via the thin-walled connection 1ef.

The fitting structure of the core back segments 1a and 1f and the fitting structure of the core back segments 1c and 1d are not limited to those in the illustrated example. They may be structures in which a recessed portion is provided at the first end of the core back segment 1a, and a fitting portion in a protruding shape is provided at the first end of the core back segment 1f, and a fitting portion in a protruding shape is provided at the second end of the core back segment 1c, and a recessed portion is provided at the second end of the core back segment 1d.

A notch 12ab in a V shape widening from the concave surfaces toward convex surfaces of the core back segments is provided in a region surrounded by the thin-walled connection 1ab, the second end of the core back segment 1a, and the first end of the core back segment 1b. Likewise, notches 12bc, 12de, and 12ef in a V shape widening from the concave surfaces toward convex surfaces of the core back segments are provided in a region surrounded by the thin-walled connection 1bc, the second end of the core back segment 1b, and the first end of the core back segment 1c, a region surrounded by the thin-walled connection 1de, the second end of the core back segment 1e, and the first end of the core back segment 1d, and a region surrounded by the thin-walled connection 1ef, the second end of the core back segment 1f, and the first end of the core back segment 1e, respectively.

Grooves 1a1, 1b1, 1c1, 1d1, 1e1, and 1f1 of a shape widening from the concave surfaces toward the convex surfaces of the core back segments are formed in the centers of the respective concave surfaces of the core back segments 1a to 1f. The grooves 1a1 to 1f1 have openings 1a11, 1b11, 1c11, 1d11, 1e11, and 1f11, respectively, whose width is made smaller than the width of their respective bottoms 1a12, 1b12, 1c12, 1d12, 1e12, and 1f12.

The tooth piece 2a is made up of a fitting portion 2a1 shaped to be fitted in the groove 1a1 of the core back segment 1a, a winding portion 2a2 on which the winding 5a illustrated in FIG. 10 is wound, and a distal end portion 2a4 with a rotor-opposed surface 2a3 shaped like an umbrella. The fitting portion 2a1 has a width at the edge of the fitting portion 2a1 made larger than the width of the winding portion 2a2. The tooth piece 2b is made up of a fitting portion 2b1 shaped to be fitted in the groove 1b1 of the core back segment 1b, a winding portion 2b2 on which the winding 5b illustrated in FIG. 11 is wound, and a distal end portion 2b4 with a rotor-opposed surface 2b3 shaped like an umbrella. The fitting portion 2b1 has a width at the edge of the fitting portion 2b1 made larger than the width of the winding portion 2b2. The tooth piece 2c is made up of a fitting portion 2c1 shaped to be fitted in the groove 1c1 of the core back segment 1c, a winding portion 2c2 on which the winding 5c illustrated in FIG. 12 is wound, and a distal end portion 2c4 with a rotor-opposed surface 2c3 shaped like an umbrella. The fitting portion 2c1 has a width at the edge of the fitting portion 2c1 made larger than the width of the winding portion 2c2. The tooth piece 2d is made up of a fitting portion 2d1 shaped to be fitted in the groove 1d1 of the core back segment 1d, a winding portion 2d2 on which the winding 5d illustrated in FIG. 10 is wound, and a distal end portion 2d4 with a rotor-opposed surface 2d3 shaped like an umbrella. The fitting portion 2d1 has a width at the edge of the fitting portion 2d1 made larger than the width of the winding portion 2d2. The tooth piece 2e is made up of a fitting portion 2e1 shaped to be fitted in the groove 1e1 of the core back segment 1e, a winding portion 2e2 on which the winding 5e illustrated in FIG. 11 is wound, and a distal end portion 2e4 with a rotor-opposed surface 2e3 shaped like an umbrella. The fitting portion 2e1 has a width at the edge of the fitting portion 2e1 made larger than the width of the winding portion 2e2. The tooth piece 2f is made up of a fitting portion 2f1 shaped to be fitted in the groove 1f1 of the core back segment 1f, a winding portion 2f2 on which the winding 5f illustrated in FIG. 12 is wound, and a distal end portion 2f4 with a rotor-opposed surface 2f3 shaped like an umbrella. The fitting portion 2f1 has a width at the edge of the fitting portion 2f1 made larger than the width of the winding portion 2f2.

The grooves and the fitting portions are not limited in shape to those in the illustrated example as long as they have a structure in which a tooth piece is fitted in a core back segment. By forming the grooves and the fitting portions as in the illustrated example, after the annular insulating tooth unit 3 is fitted in the annular core back 1, misalignment between the axis of the annular insulating tooth unit 3 and the axis of the annular core back 1 is prevented, and axial positional displacement between the annular insulating tooth unit 3 and the annular core back 1 is further prevented.

Hereinafter a procedure of manufacturing the stator 100 will be described. Members in the following state are stamped out of the electromagnetic steel sheet 50 in a press apparatus not illustrated. Specifically, the rotor-opposed surfaces 2a3, 2b3, and 2c3 of the plurality of teeth fitted in the grooves individually formed in the plurality of core back segments constituting the first core back segment group 1A are opposed to the second core back segment group 1B. The rotor-opposed surfaces 2d3, 2e3, and 2f3 of the plurality of teeth fitted in the grooves individually formed in the plurality of core back segments constituting the second core back segment group 1B are opposed to the first core back segment group 1A. Adjacent tooth pieces are connected to each other by bridges 2g which are tooth piece connecting members.

FIG. 3 illustrates the first core back segment group 1A, the second core back segment group 1B, and the tooth piece group 2A stamped out of the electromagnetic steel sheet 50. Suppose that a plurality of electromagnetic steel sheets 50 is stamped by a press apparatus, so that a plurality of first core back segment groups 1A, a plurality of second core back segment groups 1B, and a plurality of tooth piece groups 2A are stacked individually. A plurality of tooth pieces stamped out of the electromagnetic steel sheets 50 is connected by the bridges 2g, so that the plurality of tooth pieces does not scatter. This not only facilitates the handling of the tooth pieces, but also facilitates combining tooth pieces originally connected, thus increasing dimensional accuracy as a core.

The bridges 2g need not be provided to all of the plurality of stacked tooth piece groups 2A. The bridges 2g in the quantity required may be provided in consideration of the man-hours to cut the bridges 2g in a subsequent step. The bridges 2g have a connecting strength by which the tooth piece groups 2A can be handled and the tooth piece groups 2A can be easily cut in a subsequent step.

After the bridges 2g are cut, as illustrated in FIGS. 4 to 6, the tooth piece groups 2A stamped out of the electromagnetic steel sheets 50 are divided into a first tooth piece pair 2-1, a second tooth piece pair 2-2, and a third tooth piece pair 2-3, which are individually fixed to a jig not illustrated, for example. For example, the tooth pieces 2a and 2d constituting the first tooth piece pair 2-1 are fixed to a jig not illustrated such that the rotor-opposed surfaces 2a3 of the tooth pieces 2a are opposed to the rotor-opposed surfaces 2d3 of the tooth pieces 2d. The two tooth pieces 2b and 2e constituting the second tooth piece pair 2-2 are fixed to a jig such that the rotor-opposed surfaces 2b3 of the tooth pieces 2b are opposed to the rotor-opposed surfaces 2e3 of the tooth pieces 2e. The two tooth pieces 2c and 2f constituting the third tooth piece pair 2-3 are fixed to a jig such that the rotor-opposed surfaces 2c3 of the tooth pieces 2c are opposed to the rotor-opposed surfaces 2f3 of the tooth pieces 2f.

Next, the insulating bobbins 4a and 4d illustrated in FIG. 7 are provided to the tooth pieces 2a and 2d constituting the first tooth piece pair 2-1 fixed to the jig. The insulating bobbin 4a is an insulator made of resin for insulating the winding 5a illustrated in FIG. 10 from the tooth pieces 2a, and the insulating bobbin 4d is an insulator made of resin for insulating the winding 5d from the tooth pieces 2d. The insulating bobbin 4a and the insulating bobbin 4d are connected by the annular connecting member 6ad. A pair of separators 4s insulating adjacent windings from each other are fixed to the connecting member 6ad. This provides a first annular insulating tooth pair 30.

The insulating bobbins 4b and 4e illustrated in FIG. 8 are provided to the tooth pieces 2b and 2e constituting the second tooth piece pair 2-2 fixed to the jig. The insulating bobbin 4b is an insulator for insulating the winding 5b illustrated in FIG. 11 from the tooth pieces 2b, and the insulating bobbin 4e is an insulator made of resin for insulating the winding 5e illustrated in FIG. 11 from the tooth pieces 2e. The insulating bobbin 4b and the insulating bobbin 4e are connected by the annular connecting member 6be. A pair of separators 4s insulating adjacent windings from each other are fixed to the connecting member 6be. This provides a second annular insulating tooth pair 31.

The insulating bobbins 4c and 4f illustrated in FIG. 9 are provided to the tooth pieces 2c and 2f constituting the third tooth piece pair 2-3 fixed to the jig. The insulating bobbin 4c is an insulator for insulating the winding 5c illustrated in FIG. 12 from the tooth pieces 2c, and the insulating bobbin 4f is an insulator made of resin for insulating the winding 5f illustrated in FIG. 12 from the tooth pieces 2f. The insulating bobbin 4c and the insulating bobbin 4f are connected by the annular connecting member 6cf. A pair of separators 4s insulating adjacent windings from each other are fixed to the connecting member 6cf. This provides a third annular insulating tooth pair 32.

Although the insulating bobbins 4a to 4f made of resin are used in the first embodiment, the material of the insulating bobbins 4a to 4f is not limited to resin.

Next, the windings 5a and 5d illustrated in FIG. 10 are wound around the first annular insulating tooth pair 30, the windings 5b and 5e illustrated in FIG. 11 are wound around the second annular insulating tooth pair 31, and the windings 5c and 5f illustrated in FIG. 12 are wound around the third annular insulating tooth pair 32. For example, when the pair of tooth pieces 2a and 2d constitute a U phase, the pair of tooth pieces 2b and 2e constitute a V phase, and the pair of tooth pieces 2c and 2f constitute a W phase, by connecting two windings provided to each pair by a crossover wire, connecting operations can be omitted. When, as illustrated in FIG. 16, the number of tooth pieces of a stator is twelve, and a rotor not illustrated has ten poles and three phases, they are divided into three sets of annular insulating tooth pairs with four tooth pieces disposed crosswise, and a winding is provided to each tooth. In this case, windings cannot be connected by a crossover wire because windings of two different phases are provided to the same set of annular insulating tooth pairs. In this case, by tying a winding start portion and a winding end portion of windings around typing pins not illustrated provided at insulating bobbins, the windings are prevented from loosening. Thus the plurality of tooth pieces 2a to 2f are separated from the core back segments 1a to 1f illustrated in FIG. 2, and are each housed in an insulating bobbin with adjacent tooth pieces separated from each other. Therefore, adjacent tooth pieces do not block a path of a magnet wire located between a winding machine not illustrated and insulating bobbins, allowing winding with high density in a short time and in order.

Next the first annular insulating tooth pair 30, the second annular insulating tooth pair 31, and the third annular insulating tooth pair 32 provided with windings are combined as illustrated in FIG. 13 to provide the annular insulating tooth unit 3.

In parallel to the manufacturing of the annular insulating tooth unit 3, the core back 1 illustrated in FIG. 14 is manufactured. The core back 1 is manufactured by connecting a first end of the first core back segment group stamped out of the electromagnetic steel sheet 50 to an end portion of the second core back segment group located opposite to the first end of the first core back segment group, and connecting a second end of the first core back segment group stamped out of the electromagnetic steel sheet 50 to an end portion of the second core back segment group located opposite to the second end of the first core back segment group. Specifically, the annular core back 1 is provided by fitting the fitting portion 1dc in the recessed portion 1cd, then bending the core back segments such that the respective concave surfaces of the core back segments face each other with the thin-walled connections between adjacent core back segments as joints, and fitting the fitting portion 1af in the recessed portion 1fa. The recessed portion 1cd stamped out of a region at the right side of the paper surface of the electromagnetic steel sheet 50 illustrated in FIG. 2 is connected to the fitting portion 1dc located in a region near the recessed portion 1cd. The recessed portion 1fa stamped out of a region at the left side of the paper surface of the electromagnetic steel sheet 50 is connected to the fitting portion 1af located in a region near the recessed portion 1fa. Even if the thickness of the electromagnetic steel sheet 50 is different between the right region of the paper surface and the left region of the paper surface, the sheet thickness of the recessed portion 1cd is equal to the sheet thickness of the fitting portion 1dc, and the sheet thickness of the recessed portion 1fa is equal to the sheet thickness of the fitting portion 1af. Here, when the sheet thickness of the recessed portion 1cd is different from the sheet thickness of the fitting portion 1dc, or the sheet thickness of the recessed portion 1fa is different from the sheet thickness of the fitting portion 1af, and a plurality of core backs 1 is stacked, a recessed portion 1fa constituting a part of a core back 1, for example, enters a gap between the core back 1 and an adjacent core back 1, which can cause the problem that dimensional accuracy in the stacking direction suffers, or the fitting strength of the core back 1 is reduced. In the present embodiment, the first core back segment group 1A and the tooth piece group 2A arranged as illustrated in FIG. 1 are stamped out of the electromagnetic steel sheet 50, so that the sheet thickness of the recessed portion 1cd is equal to the sheet thickness of the fitting portion 1dc, and the sheet thickness of the recessed portion 1fa is equal to the sheet thickness of the fitting portion 1af. Therefore, the above problem can be prevented from occurring. Although an example of configuring the annular core back 1 using two core back segment groups has been explained with FIG. 14, the number of core back segment groups is not limited to two. When three or more core back segment groups are used to configure the annular core back 1, the same effects can be provided. In particular, division into an even number of core back segment groups allows the sheet thicknesses of all fitting portions to be made uniform.

Thereafter, as illustrated in FIG. 15, welding is performed on an abutting portion 6ab between the core back segments 1a and 1b, an abutting portion 6bc between the core back segments 1b and 1c, an abutting portion 6cd between the core back segments 1c and 1d, an abutting portion 6de between the core back segments 1d and 1e, an abutting portion 6ef between the core back segments 1e and 1f, and an abutting portion 6fa between the core back segments 1f and 1a. Portions illustrated by round points in the figure are welded portions. The abutting portions 6ab to 6fa are portions where adjacent core back segments contact each other by the first core back segment group 1A and the second core back segment group 1B illustrated in FIG. 3 being bent and fitted together. Since the core back 1 is thus manufactured separately from the tooth piece group, portions where adjacent core backs contact each other can be welded from the radially inside surface of the core back 1 without being hindered by insulating bobbins, teeth, or windings, thus improving the rigidity of the core back 1 made up of the plurality of core back segments 1a to 1f. When a plurality of core backs 1 is stacked to manufacture the core back 1 illustrated in FIG. 1, performing welding between adjacent core backs 1 as well as on the abutting portions 6ab to 6fa further improves the rigidity.

Welding illustrated in FIG. 15 may be performed when the core back 1 configured without welding lacks rigidity. For example, when an entire stator is finally molded with resin, or press fitted in a frame with high rigidity, or fixed by shrink fitting, the core back 1 is unlikely to lack rigidity, and thus welding can be omitted.

Finally, the annular insulating tooth unit 3 illustrated in FIG. 13 is press fitted, shrink fitted by heating, or shrink fitted by cooling into the core back 1 illustrated in FIG. 15 to provide the stator 100 illustrated in FIG. 1. In shrink fitting by heating, fitting is performed with the temperature of the core back 1 made higher than room temperature, and in shrink fitting by cooling, fitting is performed with the temperature of the annular insulating tooth unit 3 made lower than room temperature. When the annular insulating tooth unit 3 is thus press fitted, shrink fitted by heating, or shrink fitted by cooling into the core back 1, combining tooth pieces and core back segments that were fitted together during stamping is facilitated, and the dimensional accuracy of the stator core can be improved.

As described above, the motor stator 100 according to the first embodiment includes a core back and a plurality of teeth, and grooves of a shape in which end portions of the plurality of tooth pieces are fitted are formed in the respective concave surfaces of the plurality of core back segments. This configuration enables core back segments to be taken out of an electromagnetic steel sheet with a good yield, compared to a case where annular core back segments are stamped out of an electromagnetic steel sheet as in the conventional art. The conventional yoke has a structure in which recessed portions provided in thin-walled portions that connect adjacent core segments to each other hold tooth end portions therein, so that the thin-walled portions have a radial thickness to withstand stress of holding teeth in addition to stress during bending. Therefore, the yoke that has been formed in an annular shape by bending the thin-walled portions has a problem that the roundness of the outer peripheral side may become worse. Further, the conventional yoke has a structure in which the recessed portions provided in the thin-walled portions hold the end portions of the teeth therein, and thus connections between adjacent core segments cannot be reinforced by welding, so that the reduced rigidity of the connections makes it difficult to provide roundness of the yoke outer periphery. In the motor stator 100 according to the first embodiment, end portions of a plurality of tooth pieces are fitted in the respective concave surfaces of a plurality of core back segments, so that the radial thickness of thin-walled connections can be made smaller than the conventional thin-walled portions, and connections between adjacent core segments can be welded. Thus the roundness of the yoke outer periphery is improved. Further, tooth pieces and core back segments are separated, and tooth pieces are individually housed in insulating bobbins in a state of being separated from adjacent ones. Thus winding processing on the teeth is facilitated, and winding can be performed in a short time with high density. The stator 100 in the present embodiment improves the material yield and thus enables the electromagnetic steel sheet 50 to be used without waste, and enables a reduction in volume of the electromagnetic steel sheet 50 in a manufacturing stage and reduces a step of changing the electromagnetic steel sheet 50, and thus is preferable in terms of life cycle assessment (LCA).

### Second Embodiment.

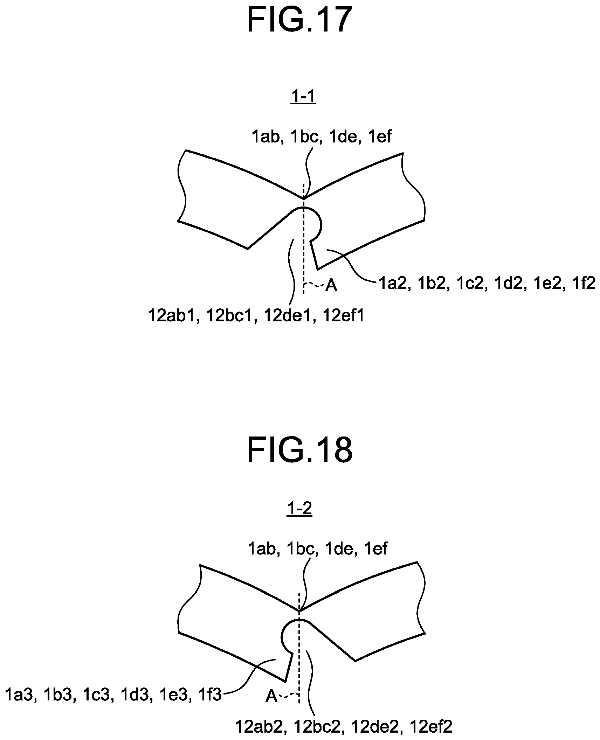

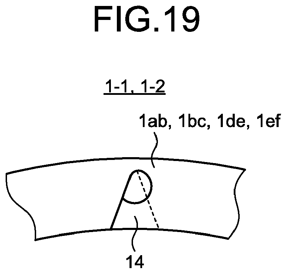

FIG. 17 is a first diagram illustrating a first core back segment group constituting a part of a motor stator according to a second embodiment of the present invention. FIG. 18 is a second diagram illustrating a second core back segment group constituting a part of the motor stator according to the second embodiment of the present invention. FIG. 19 is a diagram illustrating a state where a plurality of core back segment groups illustrated in FIGS. 17 and 18 are bent and stacked.

A first core back segment group 1-1 illustrated in FIG. 17 corresponds to the first core back segment group 1A or the second core back segment group 1B illustrated in FIG. 2. FIG. 17 illustrates a surrounding structure of thin-walled connections 1ab, 1bc, 1de, and 1ef connecting adjacent core back segments of a plurality of core back segments constituting the first core back segment group 1-1. In the first core back segment group 1-1, end portions of first core back segments of adjacent core back segments of the plurality of core back segments constituting the first core back segment group 1-1 are different in shape from end portions of second core back segments, and end portions 1a2, 1b2, 1c2, 1d2, 1e2, and 1f2 of the second core back segments have a shape protruding toward the first core back segments. In the first core back segment group 1-1, notches 12ab1, 12bc1, 12de1, and 12ef1 in a V shape widening from concave surfaces toward convex surfaces of the core back segments are provided in regions surrounded by the thin-walled connections 1ab, 1bc, 1de, and 1ef, the first core back segments, and the second core back segments. The notches 12ab1, 12bc1, 12de1, and 12ef1 correspond to the notches 12ab, 12bc, 12de, and 12ef illustrated in FIG. 2, respectively. However, the notches 12ab1 to 12ef1 illustrated in FIG. 17 have an asymmetrical V shape with respect to a line segment A passing through the thin-walled connections 1ab to 1ef and orthogonal to the longitudinal direction of the first core back segment group 1-1.

A second core back segment group 1-2 illustrated in FIG. 18 corresponds to the first core back segment group 1A or the second core back segment group 1B illustrated in FIG. 2, like the first core back segment group 1-1. In the second core back segment group 1-2, as in the first core back segment group 1-1, end portions of first core back segments of adjacent core back segments are different in shape from end portions of second core back segments. However, in the second core back segment group 1-2, end portions 1a3, 1b3, 1c3, 1d3, 1e3, and 1f3 of the first core back segments have a shape protruding toward the second core back segments. That is, notches 12ab2, 12bc2, 12de2, and 12ef2 have an asymmetrical V shape with respect to a line segment A passing through thin-walled connections 1ab to 1ef and orthogonal to the longitudinal direction of the second core back segment group 1-2, and have a shape in which the left region and the right region of the notches 12ab1, 12bc1, 12de1, and 12ef1 with respect to the line segment A in FIG. 17 are reversed.

By alternately stacking the first core back segment group 1-1 illustrated in FIG. 17 bent at the thin-walled connections 1ab to 1ef and formed in an annular shape and the second core back segment group 1-2 illustrated in FIG. 18 bent at the thin-walled connections 1ab to 1ef and formed in an annular shape, overlapping portions 14 are formed between the end portions 1a2 to 1d2 and the end portions 1a3 to 1d3 as illustrated in FIG. 19 in adjacent annular core backs.

In the core back 1 illustrated in FIG. 15, magnetic flux passes through the thin-walled connections 1ab, 1bc, 1de, and 1ef and the abutting portions 6ab, 6bc, 6de, and 6ef between adjacent core back segments. However, the thin-walled connections 1ab, 1bc, 1de, and 1ef are reduced in magnetic permeability by cutting by a press or by a magnetostriction effect produced by internal stress due to bending. The abutting portions 6ab, 6bc, 6de, and 6ef are also reduced in magnetic permeability at end faces by cutting. Therefore, the thin-walled connections and the abutting portions give large magnetic reluctance. By contrast, in the second embodiment, when magnetic flux passes from the first core back segments to the second core back segments between adjacent core back segments, magnetic flux passing from the first core back segments passes in a direction vertical to the paper surface at the overlapping portions 14 illustrated in FIG. 19, and then passes to the second core back segments. Thus the second embodiment can pass magnetic flux around portions reduced in magnetic permeability by cutting, and reduce magnetic reluctance between adjacent core back segments, and thus can improve efficiency as a motor.

### Third Embodiment.

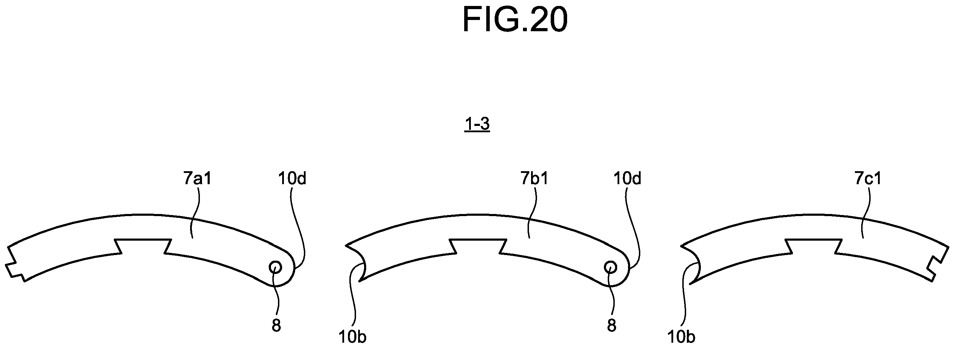

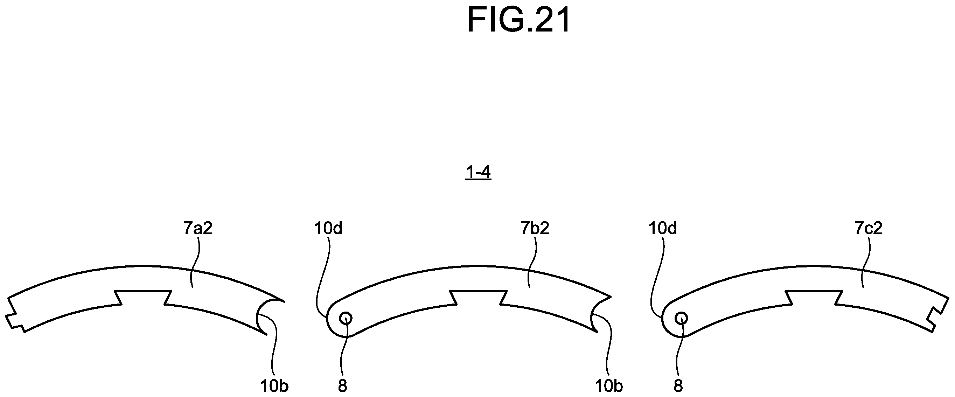

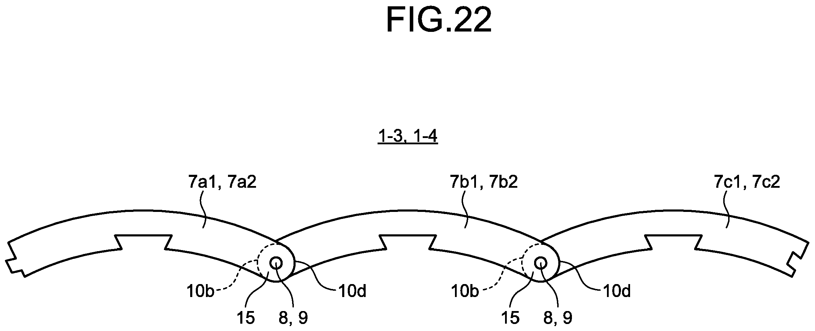

FIG. 20 is a first diagram illustrating a core back segment group constituting a part of a motor stator according to a third embodiment of the present invention. FIG. 21 is a second diagram illustrating a core back segment group constituting a part of the motor stator according to the third embodiment of the present invention. FIG. 22 is a diagram illustrating a state where a plurality of core back segment groups illustrated in FIGS. 20 and 21 are stacked.

A first core back segment group 1-3 illustrated in FIG. 20 corresponds to the first core back segment group 1A or the second core back segment group 1B illustrated in FIG. 2. FIG. 20 illustrates three adjacent core back segments 7a1, 7b1, and 7c1 of a plurality of core back segments constituting the first core back segment group 1-3. A curved concave end portion 10b similar in shape to a curved convex end portion 10d formed at the right end of the core back segment 7a1 disposed at the left of the first core back segment group 1-3 is formed at the left end of the core back segment 7b1 disposed at the center of the first core back segment group 1-3. A curved convex end portion 10d similar in shape to a curved concave end portion 10b formed at the left end of the core back segment 7c1 disposed at the right of the first core back segment group 1-3 is formed at the right end of the core back segment 7b1.

A second core back segment group 1-4 illustrated in FIG. 21 corresponds to the first core back segment group 1A or the second core back segment group 1B illustrated in FIG. 2, like the first core back segment group 1-3. FIG. 21 illustrates three adjacent core back segments 7a2, 7b2, and 7c2 of a plurality of core back segments constituting the second core back segment group 1-4. Differences from the first core back segment group 1-3 are as follows. A curved convex end portion 10d similar in shape to a curved concave end portion 10b formed at the right end of the core back segment 7a2 is formed at the left end of the core back segment 7b2. A curved concave end portion 10b similar in shape to a curved convex end portion 10d formed at the left end of the core back segment 7c2 is formed at the right end of the core back segment 7b2.

The end portions of the adjacent core back segments 7a1 and 7b1 of the plurality of core back segments constituting the first core back segment group 1-3 are fitted together, and the end portions of the adjacent core back segments 7b1 and 7c1 are fitted together. The end portions of the adjacent core back segments 7a2 and 7b2 of the plurality of core back segments constituting the second core back segment group 1-4 are fitted together, and the end portions of the adjacent core back segments 7b2 and 7c2 are fitted together. FIG. 22 illustrates a state where the first core back segment group 1-3 and the second core back segment group 1-4 thus configured are stacked alternately in a direction vertical to the paper surface. Pins 9 are inserted into holes 8 formed in each of the stacked first core back segment groups 1-3 and second core back segment groups 1-4. This forms overlapping portions 15 between the first core back segment groups 1-3 and the second core back segment groups 1-4. For the pins 9, members stamped out of an electromagnetic steel sheet 50 illustrated in FIG. 2 when the holes 8 are formed may be used.

This configuration allows individual core back segments to be bent around the pins 9. Further, magnetic flux passing between adjacent core back segments can be passed through the overlapping portions 15. Specifically, when magnetic flux passes from first core back segments to second core back segments between adjacent core back segments, magnetic flux passing from the first core back segments passes in a direction vertical to the paper surface at the overlapping portions 15 and the pins 9, and then passes to the second core back segments. Thus the third embodiment can pass magnetic flux around portions reduced in magnetic permeability by cutting, and reduce magnetic reluctance between adjacent core back segments, and thus can improve efficiency as a motor. The core back segment groups in the third embodiment, in which thin-walled connections are not used unlike in the second embodiment, can thus have a structure more robust than that in the second embodiment.

### Fourth Embodiment.

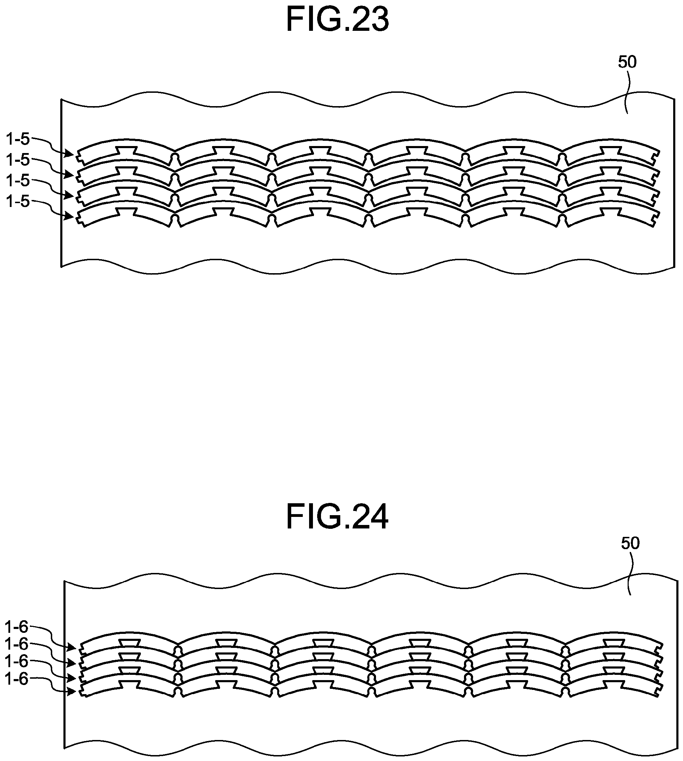

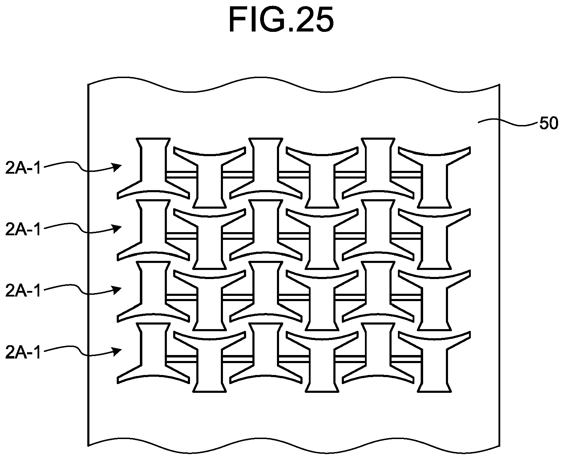

FIG. 23 is a first layout diagram when core back segment groups constituting a part of a motor stator according to a fourth embodiment of the present invention are stamped out of an electromagnetic steel sheet. FIG. 24 is a second layout diagram when core back segment groups constituting a part of a motor stator according to the fourth embodiment of the present invention are stamped out of an electromagnetic steel sheet. FIG. 25 is a layout diagram when tooth piece groups constituting a part of a motor stator according to the fourth embodiment of the present invention are stamped out of an electromagnetic steel sheet.

In an electromagnetic steel sheet 50 in FIG. 23, four core back segment groups 1-5 made up of six core back segments joined in a row, for example, are arranged. The plurality of core back segments constituting the core back segment groups 1-5 has different curvatures between their respective concave surfaces and convex surfaces. By contrast, in an electromagnetic steel sheet 50 in FIG. 24, four core back segment groups 1-6 made up of a plurality of core back segments with the same curvature between the concave surfaces and the convex surfaces are arranged. By making the curvature of the concave surfaces and the curvature of the convex surfaces uniform, the gap between adjacent core back segment groups 1-6 is made smaller than the gap between adjacent core back segment groups 1-5, further improving the yield of material from which to manufacture core back segments.

In an electromagnetic steel sheet 50 illustrated in FIG. 25, each of six tooth pieces constituting a tooth piece group 2A-1 is opposed to each of six tooth pieces constituting an adjacent tooth piece group 2A-1. This makes the gap between adjacent tooth piece groups 2A-1 smaller than the gap between the tooth piece groups 2A illustrated in FIG. 2. Therefore, the fourth embodiment improves the yield of material from which to manufacture tooth pieces compared to the first embodiment.

The configurations illustrated in the above embodiments illustrate an example of the subject matter of the present invention, and can be combined with another known art, and can be partly omitted or changed without departing from the scope of the present invention.

### Reference Signs List

1 core back, 1a, 1b, 1c, 1d, 1e, 1f core back segment, 1a1 groove, 1a11 opening, 1a12 bottom, 1a2, 1a3 end portion, 1b1 groove, 1b11 opening, 1b12 bottom, 1b2, 1b3 end portion, 1c1 groove, 1c11 opening, 1c12 bottom, 1c2, 1c3 end portion, 1d1 groove, 1d11 opening, 1d12 bottom, 1d2, 1d3 end portion, 1e1 groove, 1e11 opening, 1e12 bottom, 1e2, 1e3 end portion, 1f1 groove, 1f11 opening, 1f12 bottom, 1f2, 1f3 end portion, 1ab, 1bc, 1cd, 1dc, 1de, 1ef, 1fa thin-walled connection, 1af, 1dc fitting portion, 1cd, 1fa recessed portion, 1A first core back segment group, 1B second core back segment group, 1-1, 1-3 first core back segment group, 1-2, 1-4 second core back segment group, 1-5, 1-6 core back segment group, 2 tooth, 2a tooth piece, 2a1 fitting portion, 2a2 winding portion, 2a3 rotor-opposed surface, 2a4 distal end portion, 2b tooth piece, 2b1 fitting portion, 2b2 winding portion, 2b3 rotor-opposed surface, 2b4 distal end portion, 2c tooth piece, 2c1 fitting portion, 2c2 winding portion, 2c3 rotor-opposed surface, 2c4 distal end portion, 2d tooth piece, 2d1 fitting portion, 2d2 winding portion, 2d3 rotor-opposed surface, 2d4 distal end portion, 2e tooth piece, 2e1 fitting portion, 2e2 winding portion, 2e3 rotor-opposed surface, 2e4 distal end portion, 2f tooth piece, 2f1 fitting portion, 2f2 winding portion, 2f3 rotor-opposed surface, 2f4 distal end portion, 2g bridge, 2A, 2A-1 tooth piece group, 2-1 first tooth piece pair, 2-2 second tooth piece pair, 2-3 third tooth piece pair, 3 annular insulating tooth unit, 4a, 4b, 4c, 4d, 4e, 4f insulating bobbin, 4s separator, 5a, 5b, 5c, 5d, 5e, 5f winding, 6ad, 6be, 6cf connecting member, 6ab, 6bc, 6cd, 6de, 6ef, 6fa abutting portion, 7a1, 7b1, 7c1, 7a2, 7b2, 7c2 core back segment, 8 hole, 9 pin, 10b curved concave end portion, 10d curved convex end portion, 12ab, 12bc, 12de, 12ef notch, 12ab1, 12bc1, 12de1, 12ef1, 12ab2, 12bc2, 12de2, 12ef2 notch, 14, 15 overlapping portion, 30 first annular insulating tooth pair, 31 second annular insulating tooth pair, 32 third annular insulating tooth pair, 50 electromagnetic steel sheet, 100 stator.

## Claims

1. A motor stator comprising:
a core back made by stacking a plurality of strip-shaped core back segment groups made by connecting a plurality of arc-shaped core back segments; and
a plurality of teeth made by stacking a plurality of tooth pieces, disposed radially inside the core back segment groups formed in an annular shape, and extending toward a center of the core back, wherein
a groove of a shape in which an end portion of each of the plurality of tooth pieces is fitted is formed in a concave surface of each of the plurality of core back segments.

2. The motor stator according to claim 1, wherein
a groove of a shape widening from the concave surface toward a convex surface of each of the plurality of core back segments is formed in the concave surface of each of the plurality of core back segments, and
a fitting portion shaped to be fitted in the groove is formed at each of the plurality of tooth pieces.

3. The motor stator according to claim 1, wherein welding is performed on a portion of contact between adjacent core back segments of the plurality of core back segments constituting the core back segment groups formed in the annular shape.

4. The motor stator according to claim 1, wherein welding is performed on a portion of contact between adjacent core back segment groups of the plurality of core back segment groups constituting the core back.

5. The motor stator according to claim 1, wherein the plurality of core back segments has a curvature of the concave surface of each of the plurality of core back segments equal to a curvature of a convex surface of each of the plurality of core back segments.

6. A method of manufacturing a motor stator comprising:
a step of stamping, out of a plurality of stacked electromagnetic steel sheets, first strip-shaped core back segment groups made by connecting a plurality of arc-shaped core back segments having a groove in a concave surface, second core back segment groups made by connecting a plurality of arc-shaped core back segments having a groove in a concave surface, the concave surface being disposed opposite to the concave surface of each of the plurality of core back segments constituting the first core back segment groups, and first tooth piece groups made up of a plurality of tooth pieces having a shape corresponding to the grooves of the plurality of core back segments constituting the first core back segment groups, and second tooth piece groups made up of a plurality of tooth pieces having a shape corresponding to the grooves of the plurality of core back segments constituting the second core back segment groups disposed between the first core back segment groups and the second core back segment groups;
a step of manufacturing an annular insulating tooth unit made by disposing the first tooth piece groups and the second tooth piece groups in an annular shape and provided with windings;
a step of manufacturing a core back made by forming the first core back segment groups and the second core back segment groups individually in an annular shape; and
a step of manufacturing a stator by combining the annular insulating tooth unit with the core back.

7. A method of manufacturing a motor stator comprising:
a step of stamping, out of a plurality of stacked electromagnetic steel sheets, strip-shaped core back segment groups made by connecting a plurality of arc-shaped core back segments having a groove in a concave surface, and stamping, out of a plurality of stacked electromagnetic steel sheets different from the electromagnetic steel sheets of which the core back segment groups are stamped out, tooth piece groups made up of a plurality of tooth pieces having a shape corresponding to the groove;
a step of manufacturing an annular insulating tooth unit made by disposing the tooth piece groups in an annular shape and provided with windings;
a step of manufacturing a core back made by forming the core back segment groups in an annular shape; and
a step of manufacturing a stator by combining the annular insulating tooth unit with the core back.

8. The method of manufacturing the motor stator according to claim 6 or 7, wherein the plurality of core back segments constituting the core back segment groups has a curvature of the concave surface of each of the plurality of core back segments equal to a curvature of a convex surface of each of the plurality of core back segments.

9. The method of manufacturing the motor stator according to claim 6 or 7, wherein
the step of manufacturing the annular insulating tooth unit comprises:
a step of dividing the plurality of tooth pieces constituting the tooth piece groups into tooth piece pairs made up of two tooth pieces;
a step of mounting the tooth piece pairs to insulating bobbins;
a step of connecting the insulating bobbins mounted to the tooth pieces by a connecting member; and
a step of providing windings to the insulating bobbins.

10. The method of manufacturing the motor stator according to claim 6 or 7, wherein the core back segment groups stamped out of the electromagnetic steel sheets have notches of a shape widening from the concave surfaces toward convex surfaces of the core back segments, formed in regions surrounded by thin-walled connections connecting adjacent core back segments, first core back segments, and second core back segments.

11. The method of manufacturing the motor stator according to claim 10, wherein the notches have an asymmetrical V shape with respect to a line segment passing through the thin-walled connections and orthogonal to a longitudinal direction of the core back segment groups.

12. The method of manufacturing the motor stator according to claim 6 or 7, wherein
the core back segment groups stamped out of the electromagnetic steel sheets have holes formed in first end portions of adjacent core back segments, and
pins are inserted in the holes after the core back segments in which the holes are formed are stacked.

13. The method of manufacturing the motor stator according to claim 6 or 7, wherein the plurality of tooth pieces constituting the tooth piece groups are stamped out of the electromagnetic steel sheets in a state where the tooth pieces are connected by tooth piece connecting members.

14. The method of manufacturing the motor stator according to claim 6 or 7, wherein welding is performed on a portion of contact between adjacent core back segments of the plurality of core back segments constituting the core back.

15. The method of manufacturing the motor stator according to claim 6 or 7, wherein welding is performed between adjacent core backs of the plurality of stacked core backs.

16. The method of manufacturing the motor stator according to claim 6, wherein the annular core back unit is manufactured by connecting first ends of the first core back segment groups stamped out of the electromagnetic steel sheets to end portions of the second core back segment groups located opposite to the first ends of the first core back segment groups, and connecting second ends of the first core back segment groups stamped out of the electromagnetic steel sheets to end portions of the second core back segment groups located opposite to the second ends of the first core back segment groups.
